# EUROPEAN PATENT APPLICATION

(11) **EP 2 832 434 A1**
(43) Date of publication of application: **04.02.2015**
(21) Application number: 12873178.3
(22) Date of filing: 28.05.2012
(51) Int. Cl.: B01F 11/02

(54) **METHOD FOR SIMULTANEOUS CAVITATION TREATMENT OF LIQUID MEDIA VARYING IN COMPOSITION**

(30) Priority: 26.03.2012 RU 2012111141
(71) Applicant: Cavitanica Ltd., 420107, Kazan (RU)
(72) Inventor: GETALOV, Andrey Aleksandrovich, . (RU); GETALOV, Evgeny Evgen'evich, . (RU); GINIYATULLIN, Marat Munirovich, . (RU); SIROTKIN, Aleksandr Semenovich, . (RU)
(74) Representative: Benatov, Emil Gabriel
(86) International application number: PCT/RU2012/000421
(87) International publication number: WO 2013/147636

(57) **Abstract**

The invention relates to cavitation treatment of liquid media and media where specific content of water or other liquid phase is more than ∼35-40% of the total mass. The method is efficient in the following processes: dispersion, homogenization and emulsification, blending, disintegration, deagglomeration. The method of simultaneous cavitation treatment of liquid media different in composition by which the acoustic cavitation mode forms by double resonance effect inside a flow mechanical oscillatory system-rectangular channel of finite length at the opposite sides of which sound oscillations generate in-phase characterized by that the clearance of the mechanical oscillatory system-rectangular channel with operating liquid has additional flow channels to supply treated liquid media, the specific acoustic resistance of material of additional flow channels is close to the acoustic resistance of operating liquid, the width of clearance h is multiple of quarter of wavelength for the operating liquid at the frequency equal to the basic frequency of system-channel and the amplitude of system-channel wall oscillations creates fully-developed acoustic cavitation mode over the entire inner volume of operating liquid with flow channels and in the liquid media proper. By this method single flow-type reactor can treat different media without blending which is convenient in process cycles with simultaneous production of wide choice of products and quick readjustment of production from one product type to another.

## Description

This invention relates to the cavitation treatment of liquid media and media where specific content of water or other liquid phase is more than ∼ 35-40% of the total mass.

Acoustic ultrasonic cavitation is known to be efficiently used in different fields of economy to implement the following processes /1-6/:
- Dispersion;
- Homogenization and emulsification;
- Blending;
- Disintegration;
- Deagglomeration

In actual practice this relates to production processes of multicomponent media (emulsions, suspensions, aqueous solutions and systems), ultrasonic sterilization (disinfection) of water, milk, other food products, cleaning of tools and medical appliances, etc.

The method of liquid media treatment implemented in ultrasonic reactor configuration can be taken as prior art /1/. The method is to create in a volume of liquid an ultrasonic wave by a rod radiator equipped at its end with a source of ultrasonic oscillations, generally a piezoelectric radiator.

There are numerous variants to calculate the shape of the rod radiator and feasibility of mounting several piezoradiators on its end, however, all of them are designed to increase the amplitude of rod oscillations at its lower end and side walls /8/.

This is because in actual practice the fully-developed cavitation zone is sized in several centimeters from the oscillation surface. Therefore, the bottom part of the rod is considered the most efficient zone, because between the flat end of the radiator and the flat bottom in the treated liquid there forms a standing wave/. It is difficult to make the diameter of the bottom part of the end more than 50-70 mm. There are restrictions on the volume of treated medium and on simultaneous treatment by one reactor of two or more liquid media of different composition without their blending.

Another alternative method of ultrasonic cavitation treatment of liquid media

Has been implemented in rotary-pulsed homogenizers /2/.

In the ultrasonication chamber cyclic alternating movements of the liquid form from the stator-rotor system an ultrasonic wave with cavitation effects. This is an intermediate version between the acoustic and hydrodynamic cavitation. Currently these homogenizers are most common. They are fairly simple, substantially cheaper than the ultrasonic analogues and allow treating large volumes of liquids.

However, there are fundamental restrictions for this method, too.

Low efficiency of electromechanical systems (up to 10%) limits the power of ultrasonic wave to 2-3 W/cm2 which is not sufficient for many processes, e.g. for destruction of paraffin oil or for destruction of sand-concrete mixture. The rotary-pulsed homogenizers are constrained in viscosity of the treated liquid, specifically, when suspension contains solids sizing more than ∼ 0.5 mm.

Simultaneous homogenization of media different in composition is also impossible.

Essentially similar is the method of producing emulsified cosmetic preparation according to patent Nº 2427362 of 08.09.2010 r.

The acoustic cavitation mode forms by double resonance effect inside the flow mechanical oscillatory system - a rectangular channel of finite length at the opposite sides of which acoustic oscillations generate in-phase to form a standing wave at the basic frequency for this channel wall which, in their turn form in the clearance between the channel walls a quasi-plane standing wave in the moving multiphase medium, the width of the channel wall h is, at that, multiple of a quarter of length of the wave excited in this multiphase medium, and the channel wall amplitude is optimum for different stages of emulsion production and exceeds the acoustic cavitation threshold for this treated moving multiphase medium.

Successive resonance enhancements of acoustic oscillation amplitude

Forming in the liquid treated medium allowed to create energy deposition up to ∼100 W/cm², concentrated in the narrow range close to the resonance frequency ∼ +- 1-2 kHz.

Among the disadvantages is the incapacity of the flow-type reactor to simultaneously treat different media without blending.

The purpose of the invention is the possibility of simultaneous cavitation treatment of liquid media different in composition without blending in one flow-type reactor.

This purpose is achieved by having in the clearance of the mechanical oscillatory system-rectangular channel with liquid medium additional flow channels to supply the treated liquid media, specific acoustic resistance of the material of additional flow channels being close to the acoustic resistance of operating liquid, the width of clearance h being multiple of quarter of length of the wave for the operating liquid at the frequency equal to the basic frequency of the system-channel wall, and the system-channel wall oscillation amplitude forming the fully developed acoustic cavitation mode over the entire inner volume of the operating liquid with flow channels placed in the liquid media.

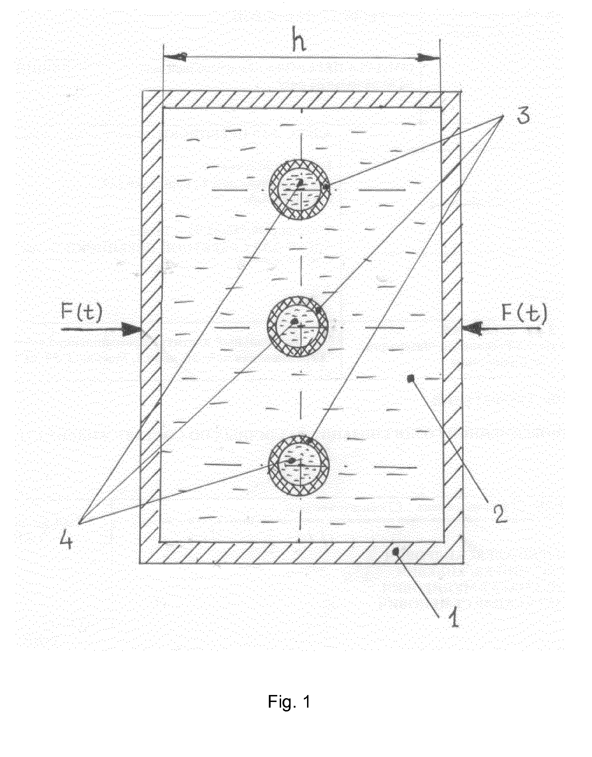

Fig.1 shows diagrammatic section of a flow-type reactor to implement this method.

For the operating liquid 2 it is possible to recommend water, its specific acoustic resistance is well known.

For the material of additional flow channels 3, if the operating liquid 2 is water it is possible to recommend polyethylene (density 0.92-0.94 g/cm³, longitudinal wave velocity ∼ 1900-1950 m/s) or other materials.

Thickness of the additional flow channel 3 walls should be minimum to reduce acoustic wave passage loss.

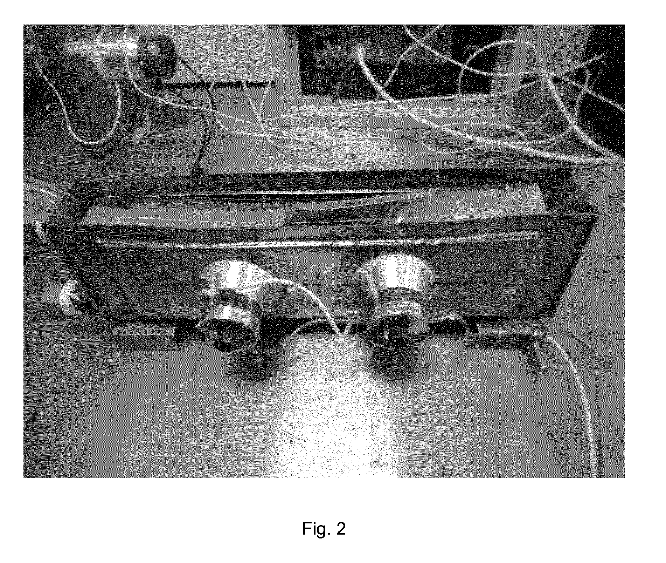

Fig. 2 shows one of the versions to implement this method. The oscillatory system-rectangular channel 1 is made as a bath, the operating liquid 2 is water. Additional flow channels 3 are made of normal polyethylene hose 12 mm in diameter, with walls 1 mm thick.

Pumps to be used are diaphragm, lobe rotary, screw, gear or other - depending on the viscosity and composition of the liquid to be treated.

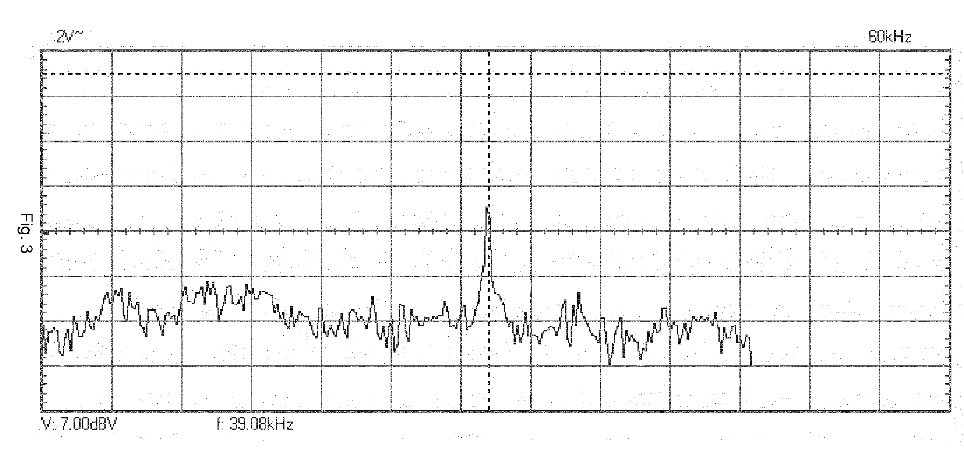

The wall (diaphragm) passing frequency oscillation is about 40 kHz. The oscillation spectrogram is shown in Fig. 3.

Measurements are made with the measurement section verified by ROSTEST, consisting of 4344-type accelerometer and Bruel&Kjaer 2635 amplifier, Velleman PCSU1000 digital oscilloscope with fast Fourier transform function to record signals with a personal computer. Linear scale with peak resolution 60 kHz is used.

The width of the channel (bath) 1 is 4 cm, which is close to the wavelength value in water for this frequency. The operating liquid 2 can be both in the flow mode and in the steady-state mode. The flow mode of the operating liquid 2 is convenient to create required optimum temperature in the channels 1 with treated media 4.

Maximum amplitude of the channel 1 wall oscillations is ∼ 5-6 microns, this is in agreement with the amplitude of acoustic wave in the operating liquid 2 about 100 W/cm2/3/.

This oscillation amplitude creates fully developed cavitation mode not in the operating liquid 2 only, but also inside the polyethylene hose (additional flow channel) 3 with the treated medium 4.

For the media 4 treated in experiments were cosmetic emulsions, paraffin oil (paraffin content ∼ 40%) with water (up to 20% by weight), sand-concrete mixtures, toothpaste, shoe polish, alcohol solutions with natural and synthetic oils, milk and other mixtures.

So, the method proposed for simultaneous cavitation treatment of liquid media different in composition allows treating different media without blending by a single reactor. This approach is convenient in practical application, e.g. to produce a wide choice of small output products. In other circumstances one reactor with appropriate replacement of additional flow channels makes possible to readjust production from cosmetic preparations to, e.g., food products or toothpaste, or shoe polish, etc. As was shown replacements in the reactors and design of additional flow channels cause no trouble.

### LITERATURE

1. Bronin F.A. A study of cavitation damage and dispersion of solid in high-intensity ultrasonic field. Authors' abstract of Candidate's (Engineering) Thesis, MISIS, 1967.
2. Chervyakov V.M., Odnolko V.G. Hydrodynamic and cavitation phenomena used in rotary apparatus. - M.: Izd-vo Mashinostroenie, 2008.
3. Bergman L. Ultrasound and its applications in science and technology. - M.: Inostrannaya litertura, 1956
4. Sirotyuk M.G. Experimental investigation of ultrasonic cavitation. In: Powerful ultrasonic fields. Ed. Rozenberg L.D., 1968
5. Margulis M.A. Fundamentals of sonochemistry. Chemical reactions in acoustic fields. - M.: Vysshaya shkola, 1984.
6. Khmelev V.N., Popova O.V. Multifunctional ultrasonic apparatus and their application under small production conditions, in agriculture and households. Alt. Gos. Tech. Un-t im. I.I. Polzunova. - Barnaul: Izd-vo Alt GU.

## Claims

1. A method of simultaneous cavitation treatment of liquid media different in composition by which the acoustic cavitation mode is formed by double resonance effect inside a flow mechanical oscillatory system-rectangular channel of finite length at the opposite side of which sound oscillations generate in-phase, **characterized in that** the clearance of the mechanical oscillatory system-rectangular channel has additional flow channels to supply treated liquid media, the specific acoustic resistance of material of additional flow metals is close to the acoustic resistance of the operating liquid, the width of clearance h is selected multiple of quarter of wavelength for the operating liquid at the frequency equal to the basic frequency of system-channel wall and the amplitude of system-channel wall oscillations creates fully developed acoustic cavitation mode over the entire inner volume of operating liquid with flow channels and in the liquid media proper.
